# EUROPEAN PATENT APPLICATION

(11) **EP 4 775 744 A1**
(43) Date of publication of application: **15.07.2026**
(21) Application number: 24879560.1
(22) Date of filing: 01.10.2024
(51) Int. Cl.: E02F 9/00, B60K 11/06

(54) **WORK MACHINE**

(30) Priority: 19.10.2023 JP 2023180573
(71) Applicant: KOBELCO CONSTRUCTION MACHINERY CO., LTD., Hiroshima-shi, Hiroshima 731-5161 (JP)
(72) Inventor: HAYASHI, Hideki, Hiroshima-shi, Hiroshima 731-5161 (JP); KIMURA, Yasumasa, Hiroshima-shi, Hiroshima 731-5161 (JP); OMORI, Atsushi, Hiroshima-shi, Hiroshima 731-5161 (JP)
(74) Representative: TBK
(86) International application number: PCT/JP2024/035167
(87) International publication number: WO 2025/084134

(57) **Abstract**

A working machine (1) includes an outer wall (13) that surrounds a machine chamber (80), and an engine (30) located in the machine chamber (80). The outer wall (13) includes a top wall part (15). The top wall part (15) includes a higher wall section (16R), (a lower wall section 17) located at a lower position than the higher wall section (16R), and an adjacent wall section (18R) being adjacent to the lower wall section (17) and extending downward or obliquely downward from the higher wall section (16R). The lower wall section (17) has an outlet (77) for discharging air in the machine chamber (80) to an outside of the machine chamber (80).

## Description

### Technical Field

The present disclosure relates to a working machine, such as a hydraulic excavator.

### Background Art

A working machine generally includes an outer wall that surrounds a machine chamber, and an engine located in the machine chamber. The outer wall has an outlet for discharging air in the machine chamber to an outside of the machine chamber. In this configuration, an engine sound generated from the engine leaks to the outside of the machine chamber through the outlet and causes noise. Reduction in such noise attributed to the engine sound is hence desired.

Patent Literature 1 discloses a working machine provided with a first outlet for discharging air in an axial direction of an engine output shaft and a second outlet for discharging the air upward, the first outlet and the second outlet being adjacent to each other. The first outlet is located at a bonnet (top wall part) to open in the axial direction (horizontally in a lateral direction) of the engine output shaft. The working machine includes an air discharge guide that changes a flow direction of the air, which has been discharged through the first outlet in the axial direction of the engine output shaft, so that the air flows upward at an upwind position of the second outlet.

The working machine described in Patent Literature 1 is desired to further reduce noise attributed to an engine sound leaking to the outside through the first outlet and laterally advancing.

### Citation List

### Patent Literature

Patent Literature 1: Japanese Unexamined Patent Publication No. 2011-208632

### Summary of Invention

The present disclosure has an object of providing a working machine that achieves reduction in noise attributed to an engine sound leaking to an outside through an outlet located at a top wall part and laterally advancing.

A working machine according to a first aspect includes an outer wall that surrounds a machine chamber, and an engine located in the machine chamber. The outer wall includes a top wall part. The top wall part includes a higher wall section, a lower wall section located at a lower position than the higher wall section, and an adjacent wall section being adjacent to the lower wall section and extending downward or obliquely downward from the higher wall section. The lower wall section has an outlet for discharging air in the machine chamber to an outside of the machine chamber.

### Brief Description of Drawings

Fig. 1 is a left side view of an example working machine according to an embodiment.
Fig. 2 is a perspective view of an upper slewing body of the working machine seen from obliquely rear left.
Fig. 3 is a plan view of the upper slewing body.
Fig. 4 is a cross-sectional view taken along the line A-A in Fig. 1.

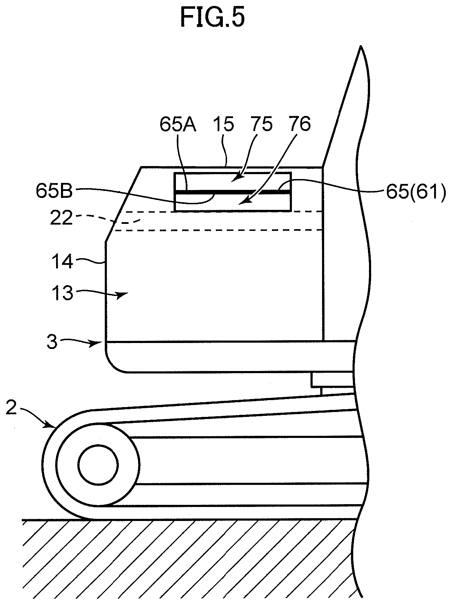

Fig. 5 is a right side view of a rear portion of the working machine.

### Description of Embodiments

Hereinafter, an embodiment of the disclosure will be described with reference to the accompanying drawings.

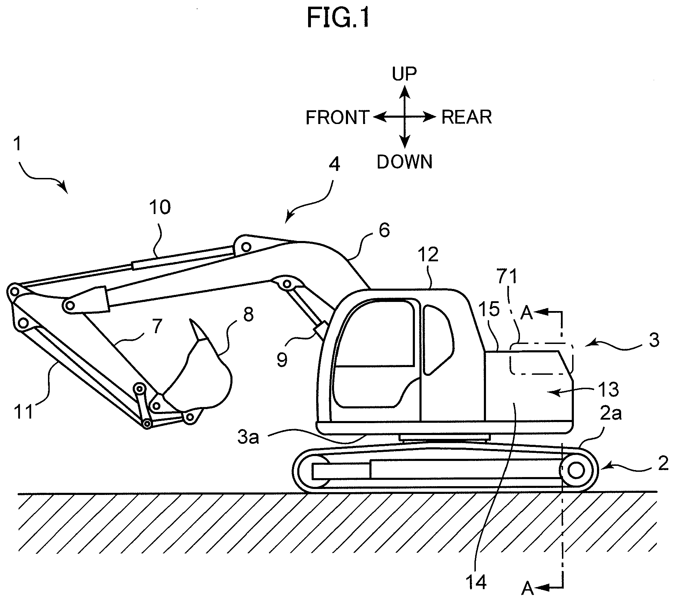

As illustrated in Fig. 1, a working machine 1 includes a lower traveling body 2 having a traveling device, an upper slewing body 3 supported on the lower traveling body 2 and configured to slew about a slewing axis extending upward and downward with respect to the lower traveling body 2, and a working device 4 supported on the upper slewing body 3. The working machine 1 according to the embodiment is a hydraulic excavator. However, a working machine in the present disclosure may be another working machine, such as a crane, a bulldozer, or other machine without limitation to the hydraulic excavator. The traveling device may be a crawler traveling device 2a illustrated in Fig. 1, or may be another traveling device having a tire (not shown).

The working device 4 includes a boom 6 attached to the upper slewing body 3 in a tiltable manner, an arm 7 rotatably attached to the boom 6, and a leading end attachment 8 rotatably attached to the arm 7. The leading end attachment 8 is a bucket in the embodiment. However, the leading end attachment may be another leading end attachment, e.g., a grapple, a fork, or a crusher.

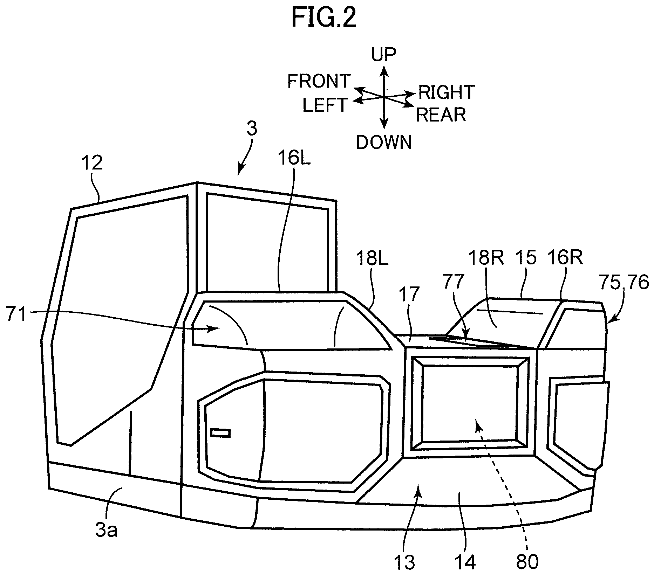

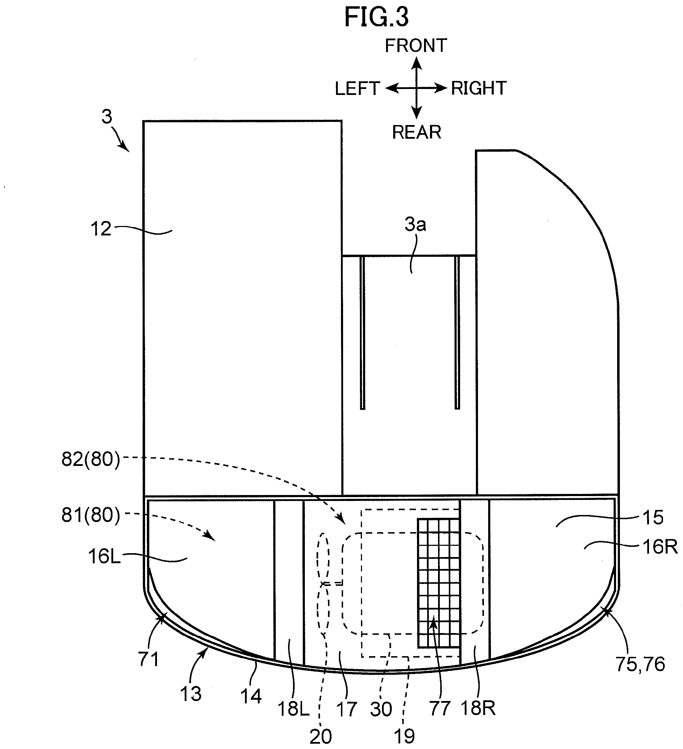

The upper slewing body 3 includes a slewing frame 3a, a cab 12 supported on the slewing frame 3a, and an outer wall 13 located behind the cab 12. The outer wall 13 has, for example, a box shape, and defines a machine chamber 80. The machine chamber 80 will be described in detail later. As shown in Fig. 2 and Fig. 3, for instance, the cab 12 is located on a front left portion of the slewing frame 3a. An operator seat, a manipulation lever, a manipulation pedal, and other parts are arranged in the cab 12. A counterweight 22 is located at a rear portion of the upper slewing body 3. The counterweight 22 is a weight to keep balance.

The working machine 1 includes a hydraulic pump 98 to be described later, and a plurality of actuators. Each of the actuators is activated by receiving supply of hydraulic fluid discharged from the hydraulic pump 98. The actuators include a boom cylinder 9 for raising and lowering the boom 6, an arm cylinder 10 for rotating the arm 7, a leading end attachment cylinder 11 for rotating the leading end attachment 8, and an unillustrated hydraulic motor to make the upper slewing body 3 slew with respect to the lower traveling body 2.

The upper slewing body 3 of the working machine 1 has the machine chamber 80 surrounded by the outer wall 13. In a specific example in Fig. 2 and Fig. 3, the machine chamber 80 is located behind the cab 12, but may be, for example, located on a certain side (right side) of the cab 12, or may be located behind and on the side of the cab 12. For instance, as illustrated in Fig. 1 to Fig. 3, the outer wall 13 includes a side wall part 14 that covers the machine chamber 80 from the sides, and a top wall part 15 that covers the machine chamber 80 from above.

The outer wall 13 of the upper slewing body 3 has an inlet 71 and a top wall part outlet 77. The top wall part outlet 77 serves as an example of the outlet in the disclosure. The inlet 71 is an opening for taking air or outside air on the outside of the machine chamber 80 into the machine chamber 80 as cooling air. The top wall part outlet 77 is an opening for discharging air in the machine chamber 80 to the outside of the machine chamber 80. The top wall part outlet 77 is located at the top wall part 15. Although the inlet 71 is located at a rear left portion of the upper slewing body 3 in the embodiment, the inlet 71 may be located at another portion without limitation to the rear left portion of the upper slewing body 3.

The outer wall 13 may further have a first side wall part outlet 75 and a second side wall part outlet 76. Each of the first side wall part outlet 75 and the second side wall part outlet 76 is an opening for discharging the air in the machine chamber 80 to the outside of the machine chamber 80. Although each of the first side wall part outlet 75 and the second side wall part outlet 76 is located at a rear right portion of the upper slewing body 3 (specifically, at a rear right portion of the side wall part 14) in the embodiment, each of the first side wall part outlet 75 and the second side wall part outlet 76 may be located at another portion without limitation to the rear right portion of the upper slewing body 3.

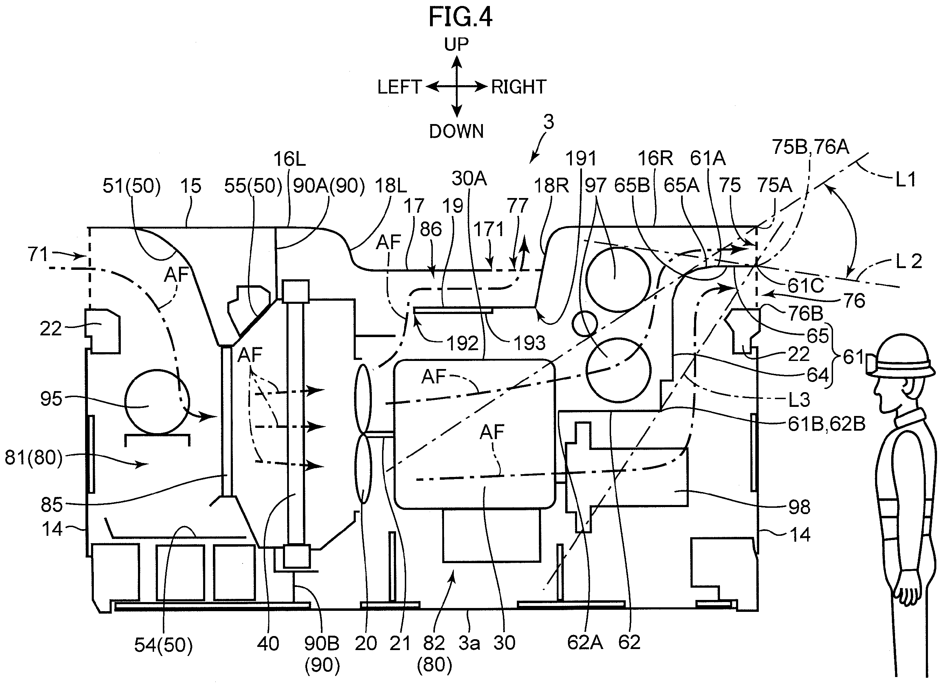

As shown in Fig. 4, the machine chamber 80 includes an air intake division 81 and an engine division 82. In the embodiment, the top wall part outlet 77 is located at a portion of the top wall part 15 that covers the engine division 82 from above. As shown in Fig. 4, the inlet 71, the air intake division 81, and the engine division 82 align in this order in a left-right direction. The air in the engine division 82 is discharged to the outside of the machine chamber 80 through the top wall part outlet 77, the first side wall part outlet 75, and the second side wall part outlet 76.

As shown in Fig. 4, the working machine 1 includes a cooling fan 20, an engine 30, a heat exchanger 40, an air intake guide 50, and the hydraulic pump 98. The cooling fan 20 generates airflow AF to advance in order of the inlet 71, the air intake division 81, the engine division 82, and the top wall part outlet 77 (the side wall part outlets 75, 76). The air intake guide 50 is located in the air intake division 81. The heat exchanger 40 is disposed between the air intake division 81 and the engine division 82. The air intake guide 50 guides air flowing into the air intake division 81 through the inlet 71 to the heat exchanger 40. The cooling fan 20, the engine 30, and the hydraulic pump 98 are located in the engine division 82. The engine 30 drives the hydraulic pump 98.

As shown in Fig. 4, the air intake guide 50 has an inlet-side upper wall 51, an inlet-side lower wall 54, and a duct 55 (heat exchanger-side duct). The inlet-side upper wall 51 and the inlet-side lower wall 54 guide the air flowing into the air intake division 81 through the inlet 71 to the duct 55. The duct 55 further guides the guided air to the heat exchanger 40. A filter 85 is provided at the duct 55. The inlet-side upper wall 51 is located in an upper part of the air intake division 81, and the inlet-side lower wall 54 is located in a lower part of the air intake division 81.

As denoted by a dash-dotted line arrow in Fig. 4, the airflow AF entering the air intake division 81 through the inlet 71 is guided by the air intake guide 50 to enter the heat exchanger 40 while forming an approximately Z-shape or S-shape. This forms a path having such a Z-shape, resulting in effectively reducing noise attributed to an engine sound passing through the heat exchanger 40 and leaking to the outside through the inlet 71.

The working machine 1 further includes a partition 90 that separates the air intake division 81 and the engine division 82 from each other. This configuration in which the partition 90 separates the air intake division 81 and the engine division 82 from each other achieves reduction in the engine sound passing through a region except the heat exchanger 40 and advancing toward the inlet 71. In the embodiment, as shown in Fig. 4, the partition 90 includes an upper partition section 90A that closes a gap between the heat exchanger 40 and the top wall part 15 of the outer wall 13, and a lower partition section 90B that closes a gap between the heat exchanger 40 and a floor surface (e.g., an upper surface of the slewing frame 3a). Besides, the partition 90 may further include an unillustrated side partition section that closes a gap between the heat exchanger 40 and the side wall part 14 of the outer wall 13.

As illustrated in Fig. 3, the rear right portion and the rear left portion of the upper slewing body 3 form a curved shape in a top view thereof. A part of the inlet 71 is located at the rear left portion, and another part of the inlet 71 is located at a left portion (a left portion of the upper slewing body 3) extending forward and rearward. The location of the part of the inlet 71 at the rear left portion forming the curved shape in this manner makes it easier to ensure an enough opening area of the inlet 71.

As shown in Fig. 4, an air cleaner 95 is located in the air intake division 81. The air cleaner 95 purifies air in the air intake division 81, and thereafter, supplies the purified air to the engine 30 through an unillustrated pipe.

The working machine 1 includes the hydraulic pump 98 that is driven by the engine 30, and a plurality of mufflers 97 each located above the hydraulic pump 98 and configured to reduce an exhaust sound from the engine 30. The hydraulic pump 98 and the mufflers 97 are located in the engine division 82.

The working machine 1 includes a first bulkhead 61 located in the machine chamber 80. In the embodiment, the first bulkhead 61 is located in the engine division 82 of the machine chamber 80. The first bulkhead 61 has an upwardly extending wall 64 disposed between the engine 30 and the first side wall part outlet 75 and extending upward, and a laterally extending wall 65 extending in the lateral direction from an upper portion of the upwardly extending wall 64 toward the first side wall part outlet 75.

In the working machine 1, the first bulkhead 61 having the upwardly extending wall 64 disposed between the engine 30 and the first side wall part outlet 75 and the laterally extending wall 65 extending in the lateral direction from the upper portion of the upwardly extending wall 64 toward the first side wall part outlet 75 is located in the engine division 82 of the machine chamber 80. This configuration reduces an engine sound leaking to the outside through the first side wall part outlet 75, and further smoothly guides the air in the engine division 82 of the machine chamber 80 toward the first side wall part outlet 75. In other words, the working machine 1 achieves reduction in noise from the engine 30 and improvement in airflow in the engine division 82 of the machine chamber 80. Consequently, the working machine 1 achieves improvement in the airflow in the engine division 82 of the machine chamber 80 while reducing the noise attributed to the engine sound leaking to the outside through the first side wall part outlet 75.

In the specific example in Fig. 4, the first bulkhead 61 has a substantially L-shape in a rear view of the working machine 1, i.e., in a back view thereof. Although the upwardly extending wall 64 extends in a vertical direction and the laterally extending wall 65 extends in a horizontal direction, each of the upwardly extending wall 64 and the laterally extending wall 65 may extend in another direction without limitation to the direction shown in the specific example in Fig. 4. For instance, the direction "upward" in which the upwardly extending wall 64 extends may be parallel to the vertical direction, or may be at an angle to the vertical direction. The "lateral direction" in which the laterally extending wall 65 extends may be parallel to the horizontal direction, or may be at an angle to the horizontal direction.

Further, although each of the upwardly extending wall 64 and the laterally extending wall 65 has a flat plate shape in the specific example in Fig. 4, each of the upwardly extending wall 64 and the laterally extending wall 65 may have another shape without limitation to the shape shown in the specific example in Fig. 4. For instance, the upwardly extending wall 64 may have a curved shape, or may have such a shape as to include a flat section and a curved section. Similarly, the laterally extending wall 65 may have a curved shape, or may have such a shape as to include a flat section and a curved section.

The upwardly extending wall 64 is arranged such that the upwardly extending wall 64 blocks a part of or a whole of an engine sound directly advancing toward the first side wall part outlet 75, the engine sound being a part of the engine sound generated from the engine 30. The upwardly extending wall 64 is arranged such that the upwardly extending wall 64 covers a part of or a whole of the engine 30 when the engine 30 is seen from the first side wall part outlet 75.

An extent denoted by a double-headed arrow between a straight line L1 and a straight line L2 in Fig. 4 indicates an extent of a sound or direct sound linearly transmitted from the engine 30 and each muffler 97 to the first side wall part outlet 75, the sound being a part of the sound leaking to the outside of the machine chamber 80 through the first side wall part outlet 75. In the rear view of the working machine 1, the straight line L1 passes an upper end 75A of the first side wall part outlet 75 and comes into contact with the first bulkhead 61, and indicates an upper limit of the direct sound. In the rear view of the working machine 1, the straight line L2 passes a lower end 75B of the first side wall part outlet 75 and comes into contact with the muffler 97, and indicates a lower limit of the direct sound.

In the specific example in Fig. 4, the muffler 97 has an upper end located at a higher position than an upper end 61A of the first bulkhead 61 and than an upper end 30A of the engine 30. Thus, the straight line L2 indicating the lower limit of the direct sound passes the lower end 75B of the first side wall part outlet 75 and comes into contact with the muffler 97. For instance, in a case where the upper end 30A of the engine 30 is located at a higher position than the upper end of the muffler 97 and than the upper end 61A of the first bulkhead 61, the straight line L2 indicating the lower limit of the direct sound may pass the lower end 75B of the first side wall part outlet 75 and come into contact with the engine 30. For instance, in a case where the upper end 61A of the first bulkhead 61 is located at a higher position than the upper end 30A of the engine 30 and than the upper end of the muffler 97, the straight line L2 indicating the lower limit of the direct sound may pass the lower end 75B of the first side wall part outlet 75 and come into contact with the first bulkhead 61.

As shown in Fig. 4, the extent of the engine sound and a sound of the muffler 97 each leaking to the outside through the first side wall part outlet 75 is at a relatively high position from the ground. This achieves reduction in the noise that a person who is near the working machine 1 feels.

As denoted by a dash-dotted line arrow in Fig. 4, the airflow AF having entered the engine division 82 advances while forming an approximately Z-shape or S-shape to reach the first side wall part outlet 75 or the second side wall part outlet 76, and goes out to the outside of the machine chamber 80 through the first side wall part outlet 75 or the second side wall part outlet 76. This configuration effectively reduces the noise attributed to the engine sound leaking to the outside through the first side wall part outlet 75 and the second side wall part outlet 76.

The second side wall part outlet 76 is located below the first side wall part outlet 75, and the laterally extending wall 65 has an upper guide surface 65A being an upper surface to guide air in the engine division 82 of the machine chamber 80 to the first side wall part outlet 75, and a lower guide surface 65B being a lower surface to guide the air in the engine division 82 of the machine chamber 80 to the second side wall part outlet 76. In this configuration, the upper guide surface 65A and the lower guide surface 65B of the laterally extending wall 65 smoothly guide the air in the engine division 82 of the machine chamber 80 respectively to the first side wall part outlet 75 and the second side wall part outlet 76.

In the specific example in Fig. 4, the laterally extending wall 65 defines a position of the lower end 75B of the first side wall part outlet 75 and a position of an upper end 76A of the second side wall part outlet 76. The top wall part 15 or the side wall part 14 of the outer wall 13 defines a position of the upper end 75A of the first side wall part outlet 75. Although an upper surface of the counterweight 22 defines a position of a lower end 76B of the second side wall part outlet 76, the side wall part 14 of the outer wall 13 may define the position.

The upper surface of the counterweight 22 has a thickness (thickness in a direction of the airflow AF) which is greater than a thickness of the side wall part 14 of the outer wall 13. The upper surface of the counterweight 22 has an upstream end in the direction of the airflow AF that is located upstream of a downstream end 61C of the first bulkhead 61 in the airflow AF. This configuration effectively prevents a foreign matter, such as rainwater or dust, from entering the machine chamber 80 (engine division 82) through the second side wall part outlet 76. The downstream end 61C of the first bulkhead 61 serves as a downstream end or right end of the first bulkhead 61 in the airflow AF, and further serves as a downstream end 61C of the laterally extending wall 65.

In the embodiment, the laterally extending wall 65 extends laterally (rightward) in the left-right direction from the upwardly extending wall 64 to a position corresponding to a side surface (right surface) of the side wall part 14 of the outer wall 13. It is noted here that a side end (right end) of the laterally extending wall 65 may not be located at the position corresponding to the side surface (right surface) of the side wall part 14, and may be located between an upper end of the upwardly extending wall 64 and the side surface (right surface) of the side wall part 14.

The upwardly extending wall 64 is disposed between the engine 30 and the second side wall part outlet 76 as well as between the engine 30 and the first side wall part outlet 75. In this configuration, the upwardly extending wall 64 is arranged such that the upwardly extending wall 64 blocks a part of or a whole of an engine sound directly advancing toward the second side wall part outlet 76, the engine sound being a part of the engine sound generated from the engine 30. The upwardly extending wall 64 is arranged such that the upwardly extending wall 64 covers a part of or a whole of the engine 30 when the engine 30 is seen from the second side wall part outlet 76.

In Fig. 4, a straight line L3 passes the downstream end 61C of the first bulkhead 61 and a lower end 61B of the first bulkhead 61 in the rear view of the working machine 1. The lower end 61B of the first bulkhead 61 is located at a lower position than the lower end 76B of the second side wall part outlet 76.

In the embodiment, the engine 30 is located upstream of the straight line L3 in the airflow AF in the rear view of the working machine 1. This achieves effective suppression of leakage of the engine sound, which is generated from the engine 30, to the outside through the second side wall part outlet 76. Moreover, in the embodiment, the muffler 97 is located upstream of the straight line L3 in the airflow AF in the rear view of the working machine 1. This achieves effective suppression of leakage of a sound, which is generated from the muffler 97, to the outside through the second side wall part outlet 76.

The working machine 1 further includes a second bulkhead 62 disposed between the hydraulic pump 98 and the mufflers 97. The second bulkhead 62 is configured to separate a region for arrangement of the hydraulic pump 98 and a region for arrangement of the mufflers 97 from each other. Hence, even if hydraulic fluid from the hydraulic pump 98 disperses therearound, this configuration prevents the hydraulic fluid from adhering to each muffler 97.

In the specific example in Fig. 4, the mufflers 97 include a first muffler 97 and a second muffler 97 located above the first muffler 97. The mufflers 97 are located directly above the hydraulic pump 98, but may not be required to be located directly above the hydraulic pump 98. The mufflers 97 are located downstream of the engine 30 in the airflow AF. The hydraulic pump 98 is located downstream of the engine 30 in the airflow AF. The mufflers 97 may be located upstream of the engine 30 in the airflow AF, and the hydraulic pump 98 may be located upstream of the engine 30 in the airflow AF.

The second bulkhead 62 disposed between the hydraulic pump 98 and each muffler 97 extends from a position adjacent to the engine 30 toward a lower portion of the upwardly extending wall 64. In this configuration, the second bulkhead 62 is configured to guide the air (airflow AF) around the engine 30 to the upwardly extending wall 64 of the first bulkhead 61 in addition to separating the region for the arrangement of the hydraulic pump 98 and the region for the arrangement of the mufflers 97 from each other.

The second bulkhead 62 has an upstream end 62A being an end at the position adjacent to the engine 30, and a downstream end 62B being another end adjacent to or connected to the lower portion of the upwardly extending wall 64. The second bulkhead 62 disposed between the hydraulic pump 98 and the muffler 97 extends from the upstream end 62A to the downstream end 62B in the lateral direction and toward the upwardly extending wall 64. The "lateral direction" in which the second bulkhead 62 extends may be parallel to the horizontal direction, or may be at an angle to the horizontal direction. Although the second bulkhead 62 has a flat plate shape in the specific example in Fig. 4, the second bulkhead 62 may have another shape without limitation to the shape shown in the specific example in Fig. 4. For instance, the second bulkhead 62 may have a curved shape, or may have such a shape as to include a flat section and a curved section.

The first side wall part outlet 75 has the upper end 75A located at a higher position than the upper end 30A of the engine 30, the first bulkhead 61 has the upper end 61A located at a higher position than the upper end 30A of the engine 30, and the first bulkhead 61 has the lower end 61B located at a lower position than the upper end 30A of the engine 30. In the configuration in which the first side wall part outlet 75 is deviated upward relative to the engine 30 in an up-down direction as shown in Fig. 4, the first bulkhead 61 is also deviated upward relative to the engine 30 so as to be effectively disposed between the engine 30 and the first side wall part outlet 75. This configuration achieves effective blocking of a part of the engine sound advancing from the engine 30 toward the first side wall part outlet 75.

The first side wall part outlet 75 is located at the side wall part 14 of the outer wall 13, and the first bulkhead 61 is covered with the top wall part 15 of the outer wall 13 located above the first bulkhead 61. The configuration in which the first side wall part outlet 75 is located at the side wall part 14 of the outer wall 13 and the top wall part 15 of the outer wall 13 covers the first bulkhead 61 from above can prevent a foreign matter, such as rainwater or dust, from entering the machine chamber.

As illustrated in Fig. 3, the rear right portion and the rear left portion of the outer wall 13 form a curved shape in a top view thereof, and the first side wall part outlet 75 is located at the rear right portion. The location of at least a part of the first side wall part outlet 75 at the rear left portion forming the curved shape in this manner makes it easier to ensure an enough opening area of the first side wall part outlet 75. In the specific example in Fig. 3, a part of the first side wall part outlet 75 is located at the rear right portion, and another part of the first side wall part outlet 75 is located at a right portion (a right portion of the upper slewing body 3) extending forward and rearward.

The outer wall 13 further has the first side wall part outlet 75 and the second side wall part outlet 76 in addition to the top wall part outlet 77. This configuration makes it easier to ensure an enough opening area of an exit for discharging the air in the machine chamber 80 to the outside of the machine chamber 80.

Hereinafter, features about the top wall part outlet 77 in the working machine 1 according to the embodiment will be described.

### [First Feature]

In the working machine 1 shown in Fig. 2, Fig. 3, and Fig. 4, the top wall part 15 includes a right higher wall section 16R, a lower wall section 17 located at a lower position than the right higher wall section 16R, and a right adjacent wall section 18R being adjacent to the lower wall section 17 and extending obliquely downward to left from the right higher wall section 16R. The lower wall section 17 has the top wall part outlet 77 for discharging air in the machine chamber 80 (specifically, in the engine division 82) to the outside of the machine chamber 80.

In the working machine 1, the right adjacent wall section 18R extends obliquely downward to left from the right higher wall section 16R and is adjacent to the lower wall section 17, and the lower wall section 17 has the top wall part outlet 77. Specifically, the right adjacent wall section 18R has a portion that extends from a position adjacent to the lower wall section 17 having the top wall part outlet 77 to the right higher wall section 16R located at a higher position than the lower wall section 17. Thus, the right adjacent wall section 18R prevents a part of the engine sound leaking to the outside of the machine chamber 80 through the top wall part outlet 77 from laterally further advancing. This configuration achieves reduction in the volume of the engine sound leaking to the outside through the top wall part outlet 77 and being transmitted rightward from the working machine 1. The working machine 1 consequently achieves reduction in noise attributed to the engine sound leaking to the outside through the top wall part outlet 77 located at the top wall part 15 and advancing rightward.

### [Second Feature]

The working machine 1 having the second feature further includes a shield wall 19 located below the lower wall section 17 and above the engine 30 in the machine chamber 80 (specifically, in the engine division 82). As shown in Fig. 3 and Fig. 4, the shield wall 19 lies in such a manner as to cover the top wall part outlet 77 from below. This configuration enables the shield wall 19 to prevent a foreign matter, such as rainwater or dust, from entering the machine chamber 80 (specifically, the engine division 82) through the top wall part outlet 77. As illustrated in Fig. 3, the shield wall 19 has an upper surface that overlaps the top wall part outlet 77 in a top view. The upper surface of the shield wall 19 has a larger area than an opening area of the top wall part outlet 77.

### [Third Feature]

In the working machine 1 having the third feature, the right adjacent wall section 18R extends from the right higher wall section 16R to a right edge 191 of the shield wall 19. This configuration in which the right adjacent wall section 18R and the shield wall 19 are continuous further effectively prevents a foreign matter, such as rainwater or dust, from entering the machine chamber through the outlet. The right adjacent wall section 18R has an upper end located at a higher position than the lower wall section 17, and the right adjacent wall section 18R has a lower end located at a lower position than the lower wall section 17. The upper surface of the shield wall 19 and a left surface of the right adjacent wall section 18R are preferably located to cover the whole of the top wall part outlet 77 from below in the top view.

### [Fourth Feature]

In the working machine 1 having the fourth feature, the lower wall section 17 and the shield wall 19 define therebetween a passage 86 to guide the air in the machine chamber 80 (specifically, in the engine division 82) rightward to the top wall part outlet 77. The right adjacent wall section 18R is configured to guide the air guided to the top wall part outlet 77 upward to reach a height position of the right higher wall section 16R. This configuration smoothly guides the air in the engine division 82 rightward to reach the top wall part outlet 77 along the passage 86, and smoothly guides the air guided to the top wall part outlet 77 upward to reach the height position of the right higher wall section 16R along the right adjacent wall section 18R. Besides, a part of the engine sound advancing rightward along the passage 86 hits the right adjacent wall section 18R before reaching the top wall part outlet 77, and the right adjacent wall section 18R prevents the part of the engine sound from laterally further advancing. This consequently achieves further effective reduction in the noise attributed to the engine sound leaking to the outside through the top wall part outlet 77 located at the top wall part 15 and laterally advancing.

The right adjacent wall section 18R and the shield wall 19 form a substantially L-shape in a rear or back view shown in Fig. 4. In this configuration, as denoted by a dash-dotted line arrow in Fig. 4, the airflow AF having entered the engine division 82 advances while forming an approximately Z-shape or S-shape to reach the top wall part outlet 77, and goes out to the outside of the engine division 82 through the top wall part outlet 77. This configuration effectively reduces the noise attributed to the engine sound leaking to the outside through the top wall part outlet 77.

### [Fifth Feature]

In the working machine 1 having the fifth feature, the top wall part outlet 77 is defined by a right edge 171 of the lower wall section 17 and the right adjacent wall section 18R. In this configuration, the right adjacent wall section 18R is located at a just right position of the top wall part outlet 77. Thus, the right adjacent wall section 18R can more effectively prevent a part of the engine sound leaking to the outside through the top wall part outlet 77 from advancing rightward. A part of or a whole of the right edge 171 of the lower wall section 17 is spaced leftward from the right adjacent wall section 18R.

### [Sixth Feature]

In the working machine 1 having the sixth feature, the top wall part 15 further includes, in addition to the right higher wall section 16R and the right adjacent wall section 18R, a left higher wall section 16L located at a left position of the lower wall section 17, and a left adjacent wall section 18L located at a left position of the lower wall section 17 and extending obliquely downward to right from the left higher wall section 16L. The right adjacent wall section 18R is located at a right position of the lower wall section 17 and the left adjacent wall section 18L is located at a left position of the lower wall section, and the top wall part outlet 77 is located at the lower wall section 17 between the right adjacent wall section 18R and the left adjacent wall section 18L. The right adjacent wall section 18R prevents a part of the engine sound leaking to the outside through the top wall part outlet 77 from advancing rightward. The left adjacent wall section 18L prevents another part of the engine sound leaking to the outside through the top wall part outlet 77 from advancing leftward. This configuration achieves reduction in the volume of the engine sound leaking to the outside through the top wall part outlet 77 and being transmitted rightward and leftward from the working machine 1. This results in achievement in further reduction in the noise attributed to the engine sound leaking to the outside through the top wall part outlet 77 located at the top wall part 15 and advancing rightward and leftward.

The left adjacent wall section 18L has an upper edge located at a higher position than the lower wall section 17, and the left adjacent wall section 18L has a lower edge connected to a left edge of the lower wall section 17. Each of the lower edge of the left adjacent wall section 18L and the left edge of the lower wall section 17 is located at a left position of a left edge 192 of the shield wall 19. This allows the air in the engine division 82 to smoothly flow into the passage 86.

The lower wall section 17 extends rightward from the lower edge of the left adjacent wall section 18L toward the right adjacent wall section 18R. The shield wall 19 extends leftward from the lower edge of the right adjacent wall section 18R. The right edge 191 of the shield wall 19 may be located at a right position of the right edge of the lower wall section 17.

In the specific example in Fig. 4, although the lower wall section 17 and the shield wall 19 extend in the horizontal direction, the lower wall section 17 and the shield wall 19 may extend in another direction without limitation to the direction shown in the specific example in Fig. 4. The lower wall section 17 and the shield wall 19 may extend in a direction parallel to the horizontal direction, or may extend in a direction at an angle to the horizontal direction. The right higher wall section 16R and the left higher wall section 16L may extend in a direction parallel to the horizontal direction, or may extend in a direction at angle to the horizontal direction. Each of the right higher wall section 16R, the left higher wall section 16L, the lower wall section 17, the right adjacent wall section 18R, the left adjacent wall section 18L, and the shield wall 19 has a flat plate shape, but may have another shape without limitation to the shape shown in the specific example in Fig. 4. Each of the right higher wall section 16R, the left higher wall section 16L, the lower wall section 17, the right adjacent wall section 18R, the left adjacent wall section 18L, and the shield wall 19 may have a curved shape, or may have such a shape as to include a flat portion and a curved portion.

### [Modifications]

Heretofore, the embodiment of the disclosure is described, but the disclosure is not limited to the embodiment and includes, for example, the modifications described below.

### (A) Outlet

Although the outer wall 13 has the first side wall part outlet 75 and the second side wall part outlet 76 in addition to the top wall part outlet 77 in the embodiment, a working machine in the disclosure may exclude one of or both the first side wall part outlet 75 and the second side wall part outlet 76 which are not indispensable.

The top wall part outlet 77 located at the lower wall section 17 is defined by the right edge of the lower wall section 17 and the right adjacent wall section 18R in the embodiment, but may be defined by the left edge of the lower wall section 17 and the left adjacent wall section 18L. In this configuration, a part of or a whole of the left edge of the lower wall section 17 may be spaced rightward from the left adjacent wall section 18L. Further, in a working machine in the present disclosure, an outlet (top wall part outlet) located at a top wall part may be an opening penetrating a lower wall section. In this configuration, the top wall part outlet is defined by the lower wall section so as to be located in the lower wall section. Specifically, in the present disclosure, the top wall part outlet located at the lower wall section may be defined by an inner edge of the opening penetrating the lower wall section, or may be defined by the side edge of the lower wall section and the adjacent wall section.

### (B) Higher Wall Section and Adjacent Wall Section

Although the top wall part 15 includes the right higher wall section 16R located at a right position of the lower wall section 17, the right adjacent wall section 18R located at a right position of the lower wall section 17 and extending downward or obliquely downward from the right higher wall section 16R, the left higher wall section 16L located at a left position of the lower wall section 17, and the left adjacent wall section 18L located at a left position of the lower wall section 17 and extending downward or obliquely downward from the left higher wall section 16L in the embodiment, a working machine in the present disclosure is not limited to the specific example in the embodiment. In the working machine in the present disclosure, a top wall part may include a right higher wall section and a right adjacent wall section, and may exclude a left higher wall section and a left adjacent wall section. Alternatively, the top wall part may include the left higher wall section and the left adjacent wall section, and may exclude the right higher wall section and the right adjacent wall section. The top wall part may include one of a front higher wall section located in front of the lower wall section and a rear higher wall section located behind the lower wall section, or may include both the front higher wall section and the rear higher wall section. Specifically, the top wall part may include a front higher wall section located in font of the lower wall section, and a front adjacent wall section being adjacent to the lower wall section and extending downward or obliquely downward from the front higher wall section. Besides, the top wall part may include a rear higher wall section located behind the lower wall section, and a rear adjacent wall section being adjacent to the lower wall section and extending downward or obliquely downward from the rear higher wall section.

Although the right adjacent wall section 18R extends obliquely downward to left from the right higher wall section 16R and the left adjacent wall section 18L extends obliquely downward to right from the left higher wall section 16L in the embodiment, the right adjacent wall section 18R may extend downward from the right higher wall section 16R and the left adjacent wall section 18L may extend downward from the left higher wall section 16L.

### (C) Shield Wall

Although the working machine 1 includes the shield wall 19 in the embodiment, a working machine in the present disclosure may exclude the shield wall which is not indispensable. Further, the shield wall 19 may have a lower surface to which, for example, a sound absorber 193 is attached as shown in Fig. 4.

Conclusively, the present disclosure provides a working machine that achieves reduction in noise attributed to an engine sound leaking to an outside through an outlet located at a top wall part and laterally advancing.

A working machine according to a first aspect includes an outer wall that surrounds a machine chamber, and an engine located in the machine chamber. The outer wall includes a top wall part. The top wall part includes a higher wall section, a lower wall section located at a lower position than the higher wall section, and an adjacent wall section being adjacent to the lower wall section and extending downward or obliquely downward from the higher wall section. The lower wall section has an outlet for discharging air in the machine chamber to an outside of the machine chamber.

In the working machine, the adjacent wall section extends downward or obliquely downward from the higher wall section and is adjacent to the lower wall section, and the lower wall section has the outlet. Specifically, the adjacent wall section has a portion that extends from a position adjacent to the lower wall section having the outlet to the higher wall section located at a higher position than the lower wall section. Thus, the adjacent wall section prevents a part of the engine sound leaking to the outside through the outlet from laterally further advancing. This configuration achieves reduction in the volume of the engine sound leaking to the outside through the outlet and being transmitted laterally from the working machine. The working machine consequently achieves reduction in noise attributed to the engine sound leaking to the outside through the outlet located at the top wall part and laterally advancing.

The working machine according to a second aspect preferably further includes, in the working machine according to the first aspect, a configuration to be described below. Specifically, the working machine according to the second aspect preferably further includes a shield wall located below the lower wall section and above the engine in the machine chamber. Preferably, the shield wall lies in such a manner as to cover the outlet from below. The second aspect enables the shield wall to prevent a foreign matter, such as rainwater or dust, from entering the machine chamber through the outlet.

The working machine according to a third aspect preferably further includes, in the working machine according to the second aspect, a configuration to be described below. Specifically, in the working machine according to the third aspect, preferably, the adjacent wall section extends from the higher wall section to the shield wall. The third aspect in which the adjacent wall section and the shield wall are continuous further effectively prevents a foreign matter, such as rainwater or dust, from entering the machine chamber through the outlet.

The working machine according to a fourth aspect preferably further includes, in the working machine according to the second or third aspect, a configuration to be described below. Specifically, in the working machine according to the fourth aspect, preferably, the lower wall section and the shield wall define therebetween a passage to laterally guide the air in the machine chamber to the outlet, and the adjacent wall section is configured to guide the air guided to the outlet upward to reach a height position of the higher wall section. In the fourth aspect, the air in the machine chamber is smoothly guided laterally to reach the outlet along the passage, and the air guided to the outlet is smoothly guided upward to reach the height position of the higher wall section along the adjacent wall section. Besides, a part of the engine sound laterally advancing along the passage hits the adjacent wall section before reaching the outlet, and the adjacent wall section prevents the part of the engine sound from laterally further advancing. This consequently achieves further effective reduction in the noise attributed to the engine sound leaking to the outside through the outlet located at the top wall part and laterally advancing.

The working machine according to a fifth aspect preferably further includes, in the working machine according to any one of the first to fourth aspects, a configuration to be described below. Specifically, in the working machine according to the fifth aspect, the outlet may be defined by a side edge of the lower wall section and the adjacent wall section. In the fifth aspect, the adjacent wall section is located just laterally next to the outlet. Thus, the adjacent wall section more effectively prevents a part of the engine sound leaking to the outside through the outlet from laterally further advancing.

The working machine according to a sixth aspect preferably further includes, in the working machine according to the any one of the first to fifth aspects, a configuration to be described below. Specifically, in the working machine according to the sixth aspect, preferably, the higher wall section is a right higher wall section located at a right position of the lower wall section, and the adjacent wall section is a right adjacent wall section located at a right position of the lower wall section and extending downward or obliquely downward from the right higher wall section. The top wall part preferably further includes a left higher wall section located at a left position of the lower wall section, and a left adjacent wall section located at a left position of the lower wall section and extending downward or obliquely downward from the left higher wall section. In the sixth aspect, the right adjacent wall section is located at a right position of the lower wall section and the left adjacent wall section is located a left position of the lower wall section, and the lower wall section has the outlet. In this configuration, the right adjacent wall section prevents a part of the engine sound leaking to the outside through the outlet from advancing rightward, and the left adjacent wall section prevents another part of the engine sound leaking to the outside through the outlet from advancing leftward. This configuration achieves reduction in the volume of the engine sound leaking to the outside through the outlet and being transmitted rightward and leftward from the working machine. The working machine consequently achieves further reduction in noise attributed to the engine sound leaking to the outside through the outlet located at the top wall part and laterally advancing.

The working machine according to a seventh aspect preferably further includes, in the working machine according to any one of the first to fifth aspects, a configuration to be described below. Specifically, in the working machine according to the seventh aspect, the higher wall section may be located at a right, left, front, or rear position of the lower wall section.

## Claims

1. A working machine, comprising:
an outer wall that surrounds a machine chamber; and
an engine located in the machine chamber, wherein
the outer wall includes a top wall part,
the top wall part including a higher wall section, a lower wall section located at a lower position than the higher wall section, and an adjacent wall section being adjacent to the lower wall section and extending downward or obliquely downward from the higher wall section, and
the lower wall section having an outlet for discharging air in the machine chamber to an outside of the machine chamber.

2. The working machine according to claim 1, further comprising a shield wall located below the lower wall section and above the engine in the machine chamber, wherein
the shield wall lies in such a manner as to cover the outlet from below.

3. The working machine according to claim 2, wherein the adjacent wall section extends from the higher wall section to the shield wall.

4. The working machine according to claim 2 or 3, wherein the lower wall section and the shield wall define therebetween a passage to laterally guide the air in the machine chamber to the outlet, and
the adjacent wall section is configured to guide the air guided to the outlet upward to reach a height position of the higher wall section.

5. The working machine according to any one of claims 1 to 4, wherein the outlet is defined by a side edge of the lower wall section and the adjacent wall section.

6. The working machine according to any one of claims 1 to 5, wherein the higher wall section is a right higher wall section located at a right position of the lower wall section, and the adjacent wall section is a right adjacent wall section located at a right position of the lower wall section and extending downward or obliquely downward from the right higher wall section, and
the top wall part further includes a left higher wall section located at a left position of the lower wall section, and a left adjacent wall section located at a left position of the lower wall section and extending downward or obliquely downward from the left higher wall section.

7. The working machine according to any one of claims 1 to 5, wherein the higher wall section is located at a right, left, front, or rear position of the lower wall section.
